# EUROPÄISCHE PATENTSCHRIFT

(11) **EP 0 777 077 B1**
(45) Veröffentlichungstag und Bekanntmachung des Hinweises auf die Patenterteilung: **27.03.2002**
(21) Anmeldenummer: 95118824.2
(22) Anmeldetag: 30.11.1995
(51) Int. Cl.: F16N 11/08

(54) **Schmierstoffspender mit elektromotorisch gesteuerter Abgabe eines Schmierstoffes an eine Maschine**
Lubricant dispenser with electric motor controlled dispensing of lubricant to a machine
Distributeur à graisse pour délivrance commandé par moteur électrique d'une graisse à une machine

(43) Veröffentlichungstag der Anmeldung: 04.06.1997
(73) Patentinhaber: perma-tec GmbH & Co. KG, 97717 Euerdorf (DE)
(72) Erfinder: Graf, Walter, D-97717 Euerdorf (DE); Immisch, Ulrich, D-97768 Bad Kissingen (DE)
(74) Vertreter: Honke, Manfred, Dr.-Ing.

(56) Entgegenhaltungen:
- EP-A- 0 344 435
- EP-A- 0 598 678
- DE-C- 4 321 452
- GB-A- 215 205
- US-A- 4 089 624
- US-A- 5 271 528
- PATENT ABSTRACTS OF JAPAN vol. 016 no. 197 (P-1350) ,12.Mai 1992 & JP-A-04 029061 (MEIDENSHA CORP) 31.Januar 1992,

## Beschreibung

Die Erfindung betrifft einen Schmierstoffspender zur Abgabe eines Schmierstoffes an eine Maschine mit
Gehäuse für die Aufnahme eines Schmierstoffvorrates,
Maschinenanschlussteil mit Schmierstoffabgabekanal an einer Seite des Gehäuses,
in das Gehäuse eingepasstem Stellkolben, dessen Bewegung, die Schmierstoffrate bestimmend, steuerbar ist,
elektromotorischem Antrieb zur Bewegung des Stellkolbens,
einer mit dem elektromotorischen Antrieb verbundenen elektrischen Steuerungsvorrichtung zur Steuerung der Schmierstoffrate und
Mittel zur Versorgung des elektromotorischen Antriebes und der elektrischen Steuerungsvorrichtung mit elektrischer Energie,
wobei der elektromotorische Antrieb als Getriebemotor mit einem Elektromotor und mit einem Untersetzungsgetriebe ausgebildet ist, wobei die Getriebeabtriebswelle des Untersetzungsgetriebes über ein Schubgetriebe mit dem Stellkolben verbunden ist und wobei die Steuerungsvorrichtung einen Zeitgeber zur Ansteuerung des elektromotorischen Antriebes in nach Maßgabe der einzurichtenden Schmierstoffrate vorbestimmbaren Zeitintervallen aufweist. - Schmierstoffrate bezeichnet die durchschnittlich abgegebene Schmierstoffmenge in der Zeiteinheit. Üblicherweise ist die Schmierstoffrate so gering, dass der Schmierstoffvorrat für Monate, teilweise sogar Jahre ausreicht.

Ein Schmierstoffspender mit den beschriebenen Merkmalen ist aus US 5 271 528 bekannt. Bei der bekannten Ausführung ist eine Steuerungsvorrichtung zur Steuerung der Schmierstoffrate vorgesehen, die den Antriebsmotor in vorgewählten Zeitintervallen ansteuert und den Motor jeweils für eine vorgegebene Betriebsdauer einschaltet. Aus DE-C 43 21 452 ist ein weiterer Schmierstoffspender bekannt, dessen Steuervorrichtung in gleicher Weise arbeitet. Der elektromotorische Antrieb wird mit wiederkehrenden Startimpulsen angesteuert und arbeitet solange, bis ein neuer Impuls das Stopsignal abgibt. Im Rahmen der bekannten Maßnahmen ist nicht sichergestellt, dass Schmierstoff über lange Zeiträume gleichmäßig und in gewünschten Dosierungen abgegeben wird.

Der Erfindung liegt die Aufgabe zugrunde, einen Schmierstoffspender des eingangs beschriebenen Aufbaues so weiter zu entwickeln, dass eine gleichmäßige Schmierstoffabgabe über lange Zeiträume gewährleistet ist. Die Schmierstoffabgabe soll unabhängig vom Ausströmwiderstand, von Temperatureinflüssen u. dgl. exakt dosierbar sein.

Ausgehend von einem Schmierstoffspender mit den eingangs beschriebenen Merkmalen wird die Aufgabe erfindungsgemäß dadurch gelöst, dass die Steuerungsvorrichtung mit dem elektromotorischen Antrieb über einen Leistungstreiber verbunden ist, welcher die elektronischen Signale der Steuerungsvorrichtung auf zum Antrieb des elektromotorischen Antriebs geeignete Leistungspegel verstärkt, und dass eine elektromechanische Laufwegesteuerung vorgesehen ist, die einen drehfest mit einer Welle des Untersetzungsgetriebes verbundenen Rotor, einen gehäusefesten Stator und ein in vorgegebenen Winkelstellungen des Rotors betätigbares Kontaktpaar aufweist,
wobei der Leistungstreiber in vorgewählten Zeitintervallen einen Impuls erhält, der verstärkt wird und ein Anlaufen des elektromotorischen Antriebes bewirkt,
wobei beim Anlaufen des elektromotorischen Antriebes ein Stromkreis geschlossen wird und der elektromotorische Antrieb unabhängig von der Dauer des am Leistungstreiber anliegenden Impulses Strom erhält und
wobei der elektromotorische Antrieb so lange arbeitet, bis der Rotor eine vorgegebene Winkelstellung erreicht, in der das Kontaktpaar den Stromfluss zum elektromotorischen Antrieb unterbricht.

Es versteht sich, dass die Abgabeleistung des elektromotorischen Antriebes nach Maßgabe der Reibungskräfte des Stellkolbens in dem Gehäuse und dem Ausströmwiderstand des Schmierstoffes sowie nach Maßgabe der kinematischen Übertragungsfunktion zwischen dem elektromotorischen Antrieb und dem Stellkolben auszuwählen ist. Als Mittel zur Versorgung des elektromotorischen Antriebes und der elektrischen Steuerungsvorrichtung mit elektrischer Energie kommen grundsätzlich Batterien, wieder aufladbare Akkumulatoren oder Netzgeräte (Transformatoren) in Frage. Aus Umweltschutzgründen ist aber wieder aufladbaren Akkumulatoren oder Netzgeräten der Vorzug zu geben. Der Einsatz von Netzgeräten ist insbesondere bei Maschinen, welche mit elektrischer Energie betrieben werden oder elektrische Energie erzeugen, zweckmäßig. Bei einem erfindungsgemäßen Schmierstoffspender lässt sich die Schmierstoffrate mit einfachen Mitteln vorwählen und auch im Betrieb variieren. Besonders vorteilhaft ist, dass eine eingestellte Schmierstoffrate mit besonders hoher Langzeitkonstanz eingehalten wird, da die Bewegung des Stellkolbens im Gegensatz zum Stand der Technik nicht mehr von dem temperaturabhängigen Ausströmwiderstand des Schmierstoffes mitbestimmt ist. Ein erfindungsgemäßer Schmierstoffspender ist auch besonders umweltfreundlich, da er vollständig wiederverwendbar ist.

Die Steuerungsvorrichtung weist im einzelnen einen Zeitgeber zur Ansteuerung des elektromotorischen Antriebes in nach Maßgabe der einzurichtenden Schmierstoffrate vorbestimmten Zeitintervallen auf. Im einfachsten Fall handelt es sich bei dem Zeitgeber um einen Timer-Baustein, welcher hinsichtlich Impulsdauer und Impulspause einstellbare Impulse liefert. Vorzugsweise weist die Steuerungsvorrichtung einen Mikroprozessor auf, wobei der Mikroprozessor zumindest zum Teil als einstellbarer Zeitgeber programmiert ist und wobei die Zeitintervalle über von einer Bedienperson betätigbare Schalter einstellbar und veränderbar sind. Der Leistungstreiber kann aus zumindest einem elektromechanischen Relais, elektronischen Relais oder linearen Halbleiterverstärkern bestehen. Eine besonders hohe Betriebssicherheit der Maschine, an welche der Schmierstoffspender angeschlossen ist, lässt sich einrichten, wenn die elektrische Steuerungsvorrichtung eine Warnvorrichtung aufweist, mittels welcher bei unzulässiger Stromaufnahme des elektromotorischen Antriebs infolge blockierter Antriebsachse, beispielsweise aufgrund eines verstopften Schmierstoffabgabekanals, dessen Stromversorgung ausschaltbar und eine Alarmvorrichtung aktivierbar ist. Im einfachsten Fall besteht die Alarmvorrichtung aus einer Leuchtdiode. Sofern die Steuerungsvorrichtung einen Mikroprozessor aufweist, können die Funktionen der Warnvorrichtung in diesen einprogrammiert werden.

Vorteilhafterweise sind der elektromotorische Antrieb, die Steuerungsvorrichtung und/oder die Mittel zur Versorgung mit elektrischer Energie lösbar mit dem Gehäuse und dem Stellkolben verbunden. Wenn die drei erstgenannten Bauteile eine bauliche Einheit bilden, lässt sich das Gehäuse nach Verbrauch des Schmierstoffvorrates leicht entfernen und durch ein neues, gefülltes Gehäuse ersetzen. Sofern entleerte Gehäuse gereinigt und wieder neue mit Schmierstoff befüllt werden, ist der gesamte erfindungsgemäße Schmierstoffspender somit wiederverwendbar. Der elektromotorische Antrieb, die Steuerungsvorrichtung und die Mittel zur Versorgung mit elektrischer Energie können auch, beispielsweise als bauliche Einheit, auf der dem Schmierstoff abgewandten Seite des Stellkolbens in das Gehäuse eingebaut sein.

Im folgenden werden die beschriebenen und weiteren Merkmale der Erfindung anhand lediglich Ausführungsbeispiele darstellender Zeichnungen ausführlicher erläutert. Es zeigen in schematischer Darstellung.

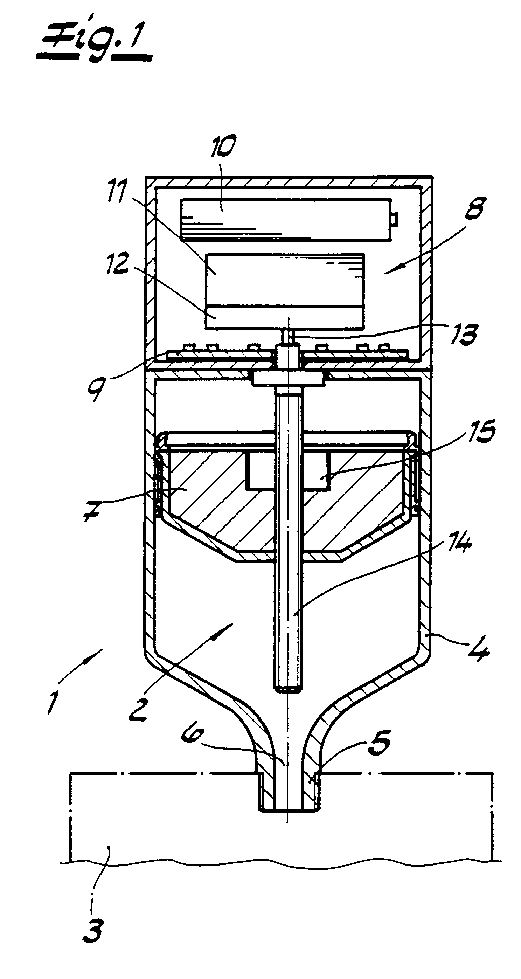

- Fig. 1: einen Vertikalschnitt durch einen erfindungsgemäßen Schmierstoffgeber,
- Fig. 2: ein Blockschaltbild der elektrischen Baugruppen für die Ausführungsform mit Elektromotor sowie Untersetzungsgetriebe,
- Fig. 3 a, b: einen Vertikalschnitt durch eine elektromechanische Laufwegesteuerung (a) sowie eine Aufsicht auf den Rotor derselben (b),
- Fig. 4: eine elektronische Schaltung für die Laufwegesteuerung gemäß Fig. 3.
- Fig. 5: entsprechend der Fig. 1 eine andere Ausführungsform eines erfindungsgemäßen Schmierstoffspenders,
- Fig. 6: einen Schnitt in Richtung A-A durch den Gegenstand der Fig. 5.

Zum grundsätzlichen Aufbau des Schmierstoffspenders 1 zur Abgabe eines Schmierstoffs 2 an eine Maschine 3 gehört ein Gehäuse 4 für die Aufnahme eines Schmierstoffvorrates, ein Maschinenanschlussteil 5 mit Schmierstoffabgabekanal 6 an einer Seite des Gehäuses 4 und ein in das Gehäuse 4 eingepresster Stellkolben 7, dessen Bewegung die Schmierstoffrate bestimmend steuerbar ist. Weiterhin erkennbar sind ein elektromotorischer Antrieb 8 zur Bewegung des Stellkolbens 7, eine Steuerungsvorrichtung 9 zur Steuerung der Schmierstoffrate, welche mit dem elektromotorischen Antrieb 8 verbunden ist, und Mittel 10 zur Versorgung des elektromotorischen Antriebes 8 und der elektrischen Steuerungsvorrichtung 9 mit elektrischer Energie. Im Ausführungsbeispiel ist das Mittel 10 zur Versorgung des elektromotorische Antriebs 8 und der elektrischen Steuerungsvorrichtung 9 ein wiederaufladbarer Akkumulator. Der elektromotorische Antrieb 8 ist als Getriebemotor mit einem Elektromotor 11 sowie mit einem Untersetzungsgetriebe 12 ausgebildet. Die Getriebeabtriebswelle 13 ist über ein Schubgetriebe mit dem Stellkolben 7 verbunden. Das Schubgetriebe ist als Schraubengetriebe mit drehbarer Spindel 14 und an dem Stellkolben 7 drehfest befestigter Spindelmutter 15 ausgebildet. Der elektromotorische Antrieb 8, die Steuerungsvorrichtung 9 und der wiederaufladbare Akkumulator 10 bilden eine bauliche Einheit und sind mit dem Gehäuse 4 und dem Stellkolben 7 lösbar verbunden.

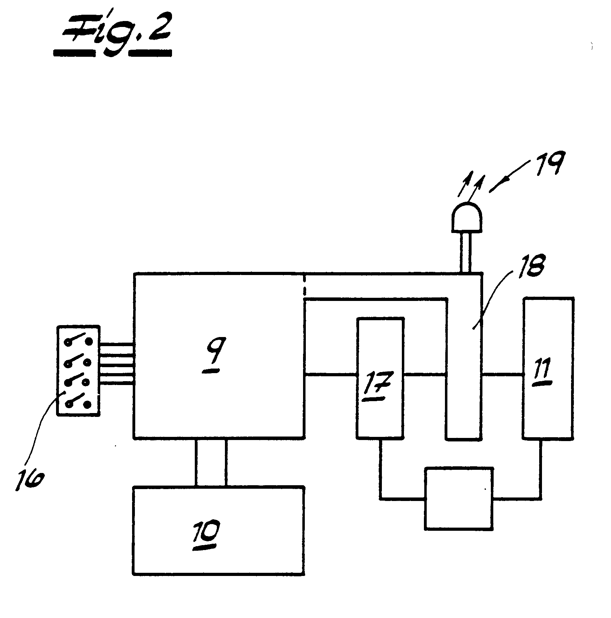

In der Fig. 2 ist zunächst eine Steuerungsvorrichtung 9 zu erkennen, welche als Mikroprozessor ausgebildet ist. Der Mikroprozessor ist als einstellbarer Zeitgeber programmiert und die Zeitintervalle können von einer Bedienperson über einen Schalter 16 eingestellt und verändert werden. Die Steuerungsvorrichtung 9 ist mit einem Leistungstreiber 17 verbunden, welcher die elektrischen Signale der Steuerungsvorrichtung 9 auf zum Antrieb des elektromotorischen Antriebs 8 geeignete Leistungspegel verstärkt. Der Leistungstreiber 17 ist wiederum über eine Warnvorrichtung 18 mit einem Elektromotor 11 verbunden. Die Warnvorrichtung 18 ist zur Messung der Stromstärke eingerichtet und aktiviert eine als Leuchtdiode ausgebildete Alarmvorrichtung 19, sobald die Stromstärke einen vorgegebenen Schwellwert überschreitet. Die Warnvorrichtung 18 ist als Teil des Mikroprozessors ausgebildet und schaltet die Stromversorgung des elektromotorischen Antriebs 8 bei aktivierter Alarmvorrichtung 19 ab.

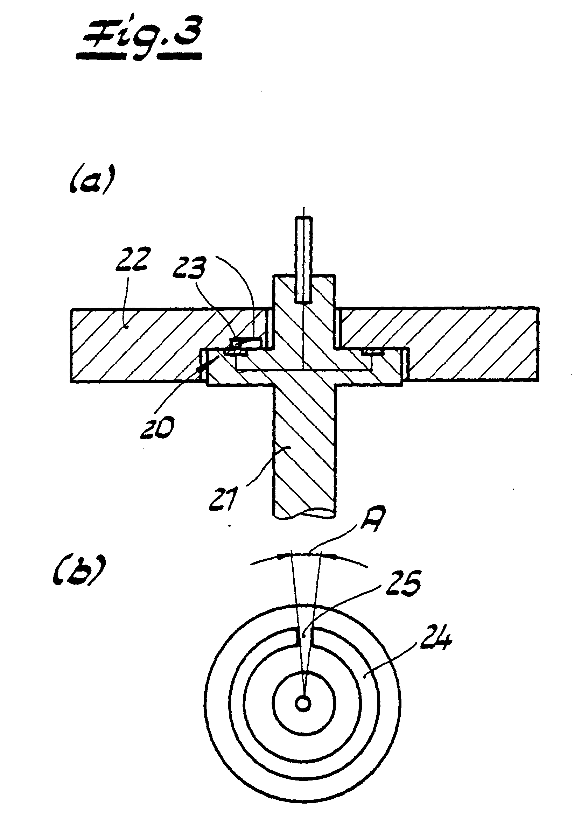

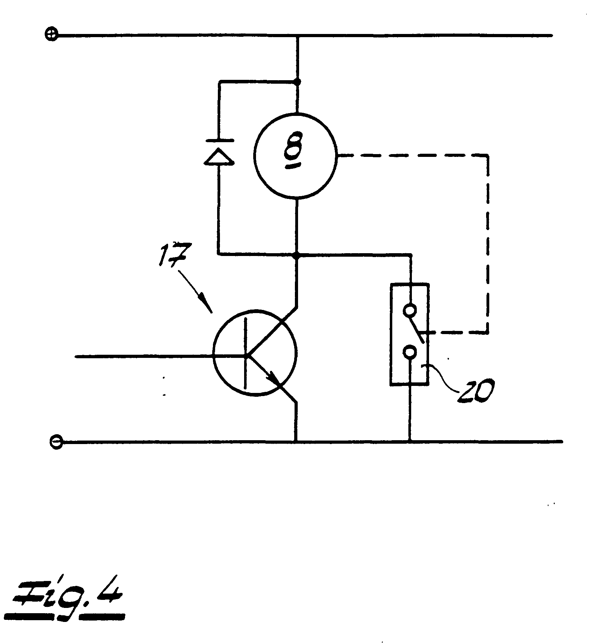

In den Fig. 3a, b erkennt man, dass die elektromechanische Laufwegesteuerung einen Rotor 21 und einen Stator 22 sowie ein Kontaktpaar 20 aufweist. Der Rotor 21 ist mit der Antriebswelle des Untersetzungsgetriebes bzw. der Motorwelle verbunden. Der Stator ist gehäusefest. Der Stator ist als ein den einen Kontakt des Kontaktpaares 20 bildender Schleifer 23 ausgebildet. Insbesondere aus der vergleichenden Betrachtung der Fig. 3a und b erkennt man, dass der Rotor den anderen Kontakt des Kontaktpaars bildet, wobei eine kreisförmig angeordnete Kontaktbahn 24 mit einem nichtleitenden Kontaktbahnbereich 25 eingerichtet ist. Der nichtleitende Kontaktbahnbereich 25 bildet einen Winkelbereich A. Das Kontaktpaar 20 ist geschlossen, wenn der Schleifer 23 sich außerhalb des Winkelbereichs A bewegt. Das Kontaktpaar 20 ist demgegenüber offen, wenn der Schleifer 23 sich innerhalb des Winkelbereichs A befindet. In der Fig. 4 ist schematisch die Schaltung des elektromotorischen Antriebs 8, des Leistungstreibers 17 und des Kontaktpaares 20 dargestellt. Die Funktionsweise ergibt sich im einzelnen aus einer vergleichenden Betrachtung der Fig. 3 und 4 wie folgt: Im Ruhezustand ist das Kontaktpaar 20 geöffnet und der elektromotorische Antrieb 8 stromlos. nach Ablauf eines vorgewählten Zeitintervalls erhält der Leistungstreiber 17, welcher als Schalttransistor ausgebildet ist, einen Impuls. Dieser Impuls bewirkt ein Anlaufen des elektromotorischen Antriebs 8. Dabei tritt der Schleifer 23 aus dem Winkelbereich A heraus. Sobald der Schleifer 23 aus dem Winkelbereich A herausgetreten ist, ist das Kontaktpaar 20 geschlossen. Daher erhält der elektromagnetische Antrieb 8 unabhängig von der Dauer des am Leistungstreiber 17 anliegenden Impulses Strom. Es versteht sich, dass der dem Leistungstreiber 17 zugeführte Impuls eine Impulsdauer aufweisen muss, welche ausreicht, um den Schleifer 23 aus dem Winkelbereich A herauszufahren.

Nachdem das Kontaktpaar 20 geschlossen ist, arbeitet der Motor so lange, bis der Schleifer 23 nach einem vollständigen Umlauf des Rotors sich wieder im Winkelbereich A befindet. Sobald der Schleifer wieder in den Winkelbereich A eingetreten ist, ist der elektromotorische Antrieb 8 wiederum stromlos bis zum nächsten Impuls aus der Steuerungsvorrichtung 9. Es versteht sich, dass auch mehrere Winkelbereiche A eingerichtet sein können, in welchen das Kontaktpaar offen ist, wenn nur ein Bruchteil einer Umdrehung der Motorwelle gewünscht ist.

Die Schaltung nach Fig. 4 ist auch ohne weiteres für eine Laufwegesteuerung gemäß Patentanspruch 3 zu verwenden, wenn der Taster bei Betätigung elektrisch offen ist. Der Winkelbereich A entspricht dann der Länge der Nocke (bzw. Nocken) in Umfangsrichtung.

Mit dem erfindungsgemäßen Schmierstoffspender 1 ist eine Dosierung von sehr kleinen Spende- bzw. Schmierstoffmengen möglich. Darüber hinaus lässt sich die Warnvorrichtung 18 unschwer an ein zentrales Kontrollsystem anschließen. Ferner ist eine Schmierung in Abhängigkeit der Maschinenlaufzeit möglich.

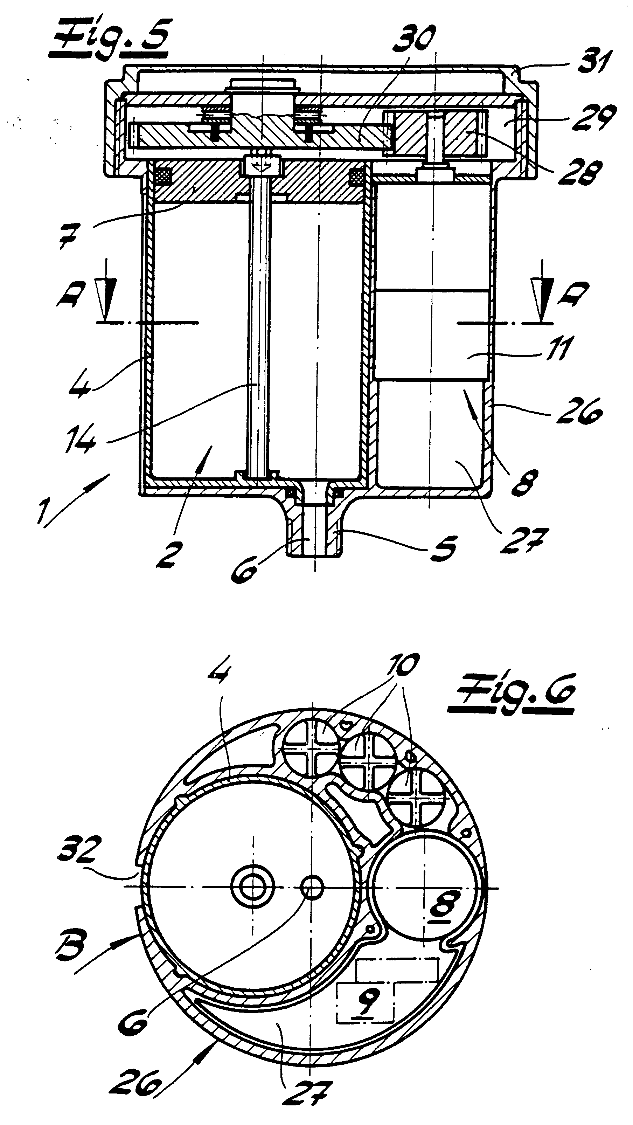

Von besonderer Bedeutung ist die Ausführungsform nach den Fig. 5 und 6. Man erkennt, dass hier das Gehäuse 4 mit dem eingepassten Stellkolben 7 in einer zylindrischen Aufnahmekammer 26 exzentrisch angeordnet ist, wobei das Gehäuse 4 einen Wandbereich B der zylindrischen Aufnahmekammer 26 berührt, dass in dem im Grundriss neben dem Gehäuse 4 freibleibenden sichelförmigen Aufnahmekammerraum 27 der elektromotorische Antrieb 8 angeordnet ist, der ein Abtriebsritzel 28 aufweist. Außerdem ist im Oberteil der Aufnahmekammer 26 ein Getrieberaum 29 angeordnet, der zumindest ein Getrieberad 30 aufweist. Auf dieses arbeitet das Abtriebsritzel 28. Die Aufnahmekammer 26 ist durch eine lösbare Deckelanordnung 31 verschlossen, die im Ausführungsbeispiel aus zwei Deckeln besteht, deren einer schraubbar ist. Es versteht sich, dass die üblichen Dichtungen angeordnet sind.

Im Ausführungsbeispiel der Fig. 5 und 6 erkennt man, dass in dem sichelförmigen Aufnahmekammerraum 27, vorzugsweise neben dem elektromotorischen Antrieb 8, auch die elektrische Steuervorrichtung 9 angeordnet ist. Man erkennt fernerhin, dass in dem sichelförmigen Aufnahmekammerraum 27, vorzugsweise neben dem elektromotorischen Antrieb 8, auch die Mittel 10 für die Versorgung des elektromotorischen Antriebes 8 mit elektrischer Energie vorgesehen sind.

Im Ausführungsbeispiel ist diejenige Ausführungsform dargestellt, die sich durch kompakte Bauweise auszeichnet. Dazu ist der elektromotorische Antrieb 8 im breitesten Bereich des sichelförmigen Aufnahmekammerraumes 27 angeordnet, wobei auf der einen Seite des elektromotorischen Antriebs 8 die elektrische Steuervorrichtung 9, auf der anderen Seite die Mittel 10 für die Energieversorgung des elektromotorischen Antriebs 8 angeordnet sind. Man erkennt in der Fig. 6, dass in dem Wandbereich der zylindrischen Aufnahmekammer 26, den das Gehäuse 4 berührt ein Kontrollschlitz 32 ausgespart ist, der das Gehäuse 4 erkennen lässt. Die beschriebenen Bauteile der zylindrischen Aufnahmekammer 26 und der Deckel 31 sind aus Kunststoff gespritzt.

## Patentansprüche

1. Schmierstoffspender zur Abgabe eines Schmierstoffes an eine Maschine mit
Gehäuse (4) für die Aufnahme eines Schmierstoffvorrates,
Maschinenanschlussteil (5) mit Schmierstoffabgabekanal (6) an einer Seite des Gehäuses (4),
in das Gehäuse (4) eingepaßtem Stellkolben (7), dessen Bewegung, die Schmierstoffrate bestimmend, steuerbar ist,
elektromotorischem Antrieb (8) zur Bewegung des Stellkolbens (7),
einer mit dem elektromotorischen Antrieb verbundenen elektrischen Steuerungsvorrichtung (9) zur Steuerung der Schmierstoffrate und
Mittel (10) zur Versorgung des elektromotorischen Antriebes (8) und der elektrischen Steuerungsvorrichtung (9) mit elektrischer Energie,
wobei der elektromotorische Antrieb (8) als Getriebemotor mit einem Elektromotor (11) und mit einem Untersetzungsgetriebe (12) ausgebildet ist, wobei die Getriebeabtriebswelle (13) des Untersetzungsgetriebes über ein Schubgetriebe mit dem Stellkolben (7) verbunden ist und wobei die Steuerungsvorrichtung (9) einen Zeitgeber zur Ansteuerung des elektromotorischen Antriebes (8) in nach Maßgabe der einzurichtenden Schmierstoffrate vorbestimmbaren Zeitintervallen aufweist, **dadurch gekennzeichnet, dass** die Steuerungsvorrichtung (9) mit dem elektromotorischen Antrieb (8) über einen Leistungstreiber (17) verbunden ist, welcher die elektrischen Signale der Steuerungsvorrichtung (9) auf zum Antrieb des elektromotorischen Antriebes (8) geeignete Leistungspegel verstärkt, und dass eine elektromechanische Laufwegesteuerung vorgesehen ist, die einen drehfest mit einer Welle des Untersetzungsgetriebes verbundenen Rotor (21), einen gehäusefesten Stator (22) und ein in vorgegebenen Winkelstellungen des Rotors betätigbares Kontaktpaar (20) aufweist,
wobei der Leistungstreiber (17) in vorgewählten Zeitintervallen einen Impuls erhält, der verstärkt wird und ein Anlaufen des elektromotorischen Antriebes (8) bewirkt,
wobei beim Anlaufen des elektromotorischen Antriebes (8) ein Stromkreis geschlossen wird und der elektromotorische Antrieb (8) unabhängig von der Dauer des am Leistungstreiber (17) anliegenden Impulses Strom erhält und
wobei der elektromotorische Antrieb (8) so lange arbeitet, bis der Rotor (21) eine vorgegebene Winkelstellung erreicht, in der das Kontaktpaar (20) den Stromfluss zum elektromotorischen Antrieb (8) unterbricht.

2. Schmierstoffspender nach Anspruch 1, **dadurch gekennzeichnet, dass** der Stator einen Schleifer (23) und der Rotor eine umlaufende Kontaktbahn (24) mit mindestens einem nicht leitenden Kontaktbahnbereich (25) aufweist.

3. Schmierstoffspender nach Anspruch 1, **dadurch gekennzeichnet, dass** der Rotor (21) als Nockenscheibe mit zumindest einer Schaltnocke ausgebildet ist, und dass die Schalteinrichtung (20) einen Taster mit einem Betätigungselement aufweist, welches durch die Schaltnocke betätigbar ist.

4. Schmierstoffspender nach einem der Ansprüche 1 bis 3, **dadurch gekennzeichnet, dass** das Schubgetriebe als Schraubengetriebe mit drehbarer Spindel (14) und an dem Stellkolben (7) drehfest befestigter oder in den Stellkolben (7) ausgeformter Spindelmutter (15) ausgebildet ist.

5. Schmierstoffspender nach einem der Ansprüche 1 bis 4, **dadurch gekennzeichnet, dass** die Steuerungsvorrichtung (9) einen Mikroprozessor aufweist, dass der Mikroprozessor zumindest zum Teil als einstellbarer Zeitgeber programmiert ist, und dass die Zeitintervalle über von einer Bedienperson betätigbare Schalter (16) einstellbar und veränderbar sind.

6. Schmierstoffspender nach einem der Ansprüche 1 bis 5, **dadurch gekennzeichnet, dass** die elektrische Steuerungsvorrichtung (9) eine Warnvorrichtung (18) aufweist, mittels welcher bei unzulässiger Stromaufnahme des elektromotorischen Antriebes (8) dessen Stromversorgung ausschaltbar und eine Alarmvorrichtung (19) aktivierbar ist.

7. Schmierstoffspender nach einem der Ansprüche 1 bis 6, **dadurch gekennzeichnet, dass** der elektromotorische Antrieb (8), die Steuerungsvorrichtung (9) und/oder die Mittel (10) zur Versorgung mit elektrischer Energie lösbar mit dem Gehäuse (4) und mit dem Stellkolben (7) verbunden sind.

8. Schmierstoffspender nach einem der Ansprüche 1 bis 7, **dadurch gekennzeichnet, dass** der elektromotorische Antrieb (8), die Steuerungsvorrichtung (9) und die Mittel (10) zur Versorgung mit elektrischer Energie auf der dem Schmierstoff (2) abgewandten Seite des Stellkolbens (7) in das Gehäuse (4) eingebaut sind.

9. Schmierstoffspender nach einem der Ansprüche 1 bis 8, **dadurch gekennzeichnet, dass** das Gehäuse (4) mit dem eingepaßten Stellkolben (7) in einer zylindrischen Aufnahmekammer (26) exzentrisch angeordnet ist, wobei das Gehäuse (4) einen Wandbereich (B) der zylindrischen Aufnahmekammer (26) berührt, dass in dem im Grundriß neben dem Gehäuse (4) freibleibenden sichelförmigen Aufnahmekammerraum (27) der elektromotorische Antrieb (8) angeordnet ist, der ein Abtriebsritzel (28) aufweist, dass im Oberteil der Aufnahmekammer (26) ein Getrieberaum (29) angeordnet ist, der zumindest ein Getrieberad (30) aufweist, auf welches das Abtriebsritzel (28) arbeitet, und dass die Aufnahmekammer (26) durch eine lösbare Deckelanordnung (31) verschlossen ist.

10. Schmierstoffspender nach Anspruch 9, **dadurch gekennzeichnet, dass** in den sichelförmigen Aufnahmekammerraum (27), vorzugsweise neben dem elektromotorischen Antrieb (8), auch die elektrische Steuervorrichtung (9) angeordnet ist.

11. Schmierstoffspender nach Anspruch 9, **dadurch gekennzeichnet, dass** in dem sichelförmigen Aufnahmekammerraum (27), vorzugsweise neben dem elektromotorischen Antrieb (8), auch die Mittel (10) für die Versorgung des elektromotorischen Antriebs (8) mit elektrischer Energie angeordnet sind.

12. Schmierstoffspender nach einem der Ansprüche 9 bis 11, **dadurch gekennzeichnet, dass** der elektromotorische Antrieb (8) im breitesten Bereich des sichelförmigen Aufnahmekammerraums (27) angeordnet ist und einerseits die elektrische Steuervorrichtung (9) für den elektromotorischen Antrieb (8) sowie andererseits die Mittel (10) für die Energieversorgung des elektromotorischen Antriebs (8) angeordnet sind.

13. Schmierstoffspender nach einem der Ansprüche 1 bis 12, **dadurch gekennzeichnet, dass** in dem Wandbereich (8) der zylindrischen Aufnahmekammer (26), den das Gehäuse berührt, ein Kontrollschlitz (32) ausgespart ist, der das Gehäuse (4) erkennen läßt.

14. Schmierstoffspender nach einem der Ansprüche 9 bis 13, **dadurch gekennzeichnet, dass** die zylindrische Aufnahmekammer (26) und der Deckel (31) aus Kunststoff gespritzt sind.

## Claims

1. A lubricant dispenser for delivering a lubricant to a machine, comprising
a housing (4) for receiving a lubricant supply,
a machine connection part (5) comprising a lubricant delivery channel (6) on one side of the housing (4),
an actuating piston (7) which is fitted into the housing (4) and the movement of which, which determines the dosage of lubricant, is controllable,
an electric motor drive (8) for moving the actuating piston (7),
an electrical controller (9), which is connected to the electric motor drive, for controlling the lubricant dosage, and
means (10) for supplying the electric motor drive (8) and the electrical controller (9) with electrical energy,
wherein the electric motor drive (8) is constructed as a geared motor comprising an electric motor (11) and comprising a reduction gear (12), wherein the gear output shaft (13) of the reduction gear is connected to the actuating piston (7) via a sliding gear drive and wherein the controller (9) comprises a timer for triggering the electric motor drive (8) at predeterminable time intervals according to the lubricant dosage which is to be set, **characterised in that** the controller (9) is connected to the electric motor drive (8) via a power driver (17) which amplifies the electrical signals from the controller (9) to a power level which is suitable for driving the electric motor drive (8), and that an electromechanical run travel control system is provided which comprises a rotor (21) which is attached fixed in rotation to a shaft of the reduction gear, a stator (22) which is fixed to the housing, and a pair of contacts (20) which can be actuated in predetermined angular positions of the rotor,
wherein the power driver (17) receives a pulse at predetermined time intervals which is amplified and causes the electric motor drive (8) to start,
wherein when the electric motor drive (8) starts a circuit is closed and the electric motor drive (8) receives current irrespective of the duration of the pulse applied to the power driver (17), and
wherein the electric motor drive (8) operates until the rotor (21) reaches a predetermined angular position in which the pair of contacts (20) interrupts the flow of current to the electric motor drive (8).

2. A lubricant dispenser according to claim 1, **characterised in that** the stator comprises a sliding contact (23) and the rotor comprises an encircling contact track (24) having at least one non-conducting contact track region (25).

3. A lubricant dispenser according to claim 1, **characterised in that** the rotor (21) is constructed as a cam disc having at least one switching cam, and that the switching device (20) comprises a contact device having an actuating element which can be actuated by the switching cam.

4. A lubricant dispenser according to any one of claims 1 to 3, **characterised in that** the sliding gear drive is constructed as spiral gearing comprising a rotatable spindle (14) and a spindle nut (15) which is attached fixed in rotation to the actuating piston (7) or which is integrally formed as part of the actuating piston (7).

5. A lubricant dispenser according to any one of claims 1 to 4, **characterised in that** the controller (9) comprises a microprocessor, that the microprocessor is programmed at least in part as an adjustable timer, and that the time intervals can be adjusted and varied via a switch (16) which can be operated by an operator.

6. A lubricant dispenser according to any one of claims 1 to 5, **characterised in that** the electrical controller (9) comprises a warning device (18), by means of which the current supply to the electric motor drive (8) can be switched off and an alarm device (19) can be actuated if the electric motor drive consumes an inadmissible amount of current.

7. A lubricant dispenser according to any one of claims 1 to 6, **characterised in that** the electric motor drive (8), the controller (9) and/or the means (10) for supplying electrical energy are removably attached to the housing (4) and to the actuating piston (7).

8. A lubricant dispenser according to any one of claims 1 to 7, **characterised in that** the electric motor drive (8), the controller (9) and/or the means (10) for supplying electrical energy are built into the housing (4) on the side of the actuating piston (72) remote from the lubricant (2).

9. A lubricant dispenser according to any one of claims 1 to 8, **characterised in that** the housing (4), with the actuating piston (7) fitted therein, is eccentrically disposed in a cylindrical receiving chamber (26), wherein the housing (4) contacts a wall region (B) of the cylindrical receiving chamber (26), that the electric motor drive (8), which comprises a drive pinion (28), is disposed in the sickle-shaped receiving chamber space (27) which remains free in horizontal projection near the housing (4), that a gear space (29) is disposed in the top part of the receiving chamber (26), which gear space comprises at least one gearwheel (30) on which the drive pinion (28) acts, and that the receiving chamber (26) is closed by a detachable cover arrangement (31).

10. A lubricant dispenser according to claim 9, **characterised in that** the electrical controller (9) is also disposed in the sickle-shaped receiving chamber space (27), preferably near the electric motor drive (8).

11. A lubricant dispenser according to claim 9, **characterised in that** the means (10) for supplying the electric motor drive (8) with electrical energy are also disposed in the sickle-shaped receiving chamber space (27), preferably near the electric motor drive (8).

12. A lubricant dispenser according to any one of claims 9 to 11, **characterised in that** the electric motor drive (8) is disposed in the widest region of the sickle-shaped receiving chamber space (27), and the electrical controller (9) for the electric motor drive (8) is disposed on one side thereof, and that the means (10) for supplying the electric motor drive (8) with energy are disposed on the other side thereof.

13. A lubricant dispenser according to any one of claims 1 to 12, **characterised in that** an inspection slot (32), which enables the housing (4) to be seen, is left blank in the wall region (B) of the cylindrical receiving chamber (26) with which the housing is in contact.

14. A lubricant dispenser according to any one of claims 9 to 13, **characterised in that** the cylindrical receiving chamber (26) and the cover (31) are injection moulded from plastics material.

## Revendications

1. Distributeur de lubrifiant pour délivrer un lubrifiant à une machine, comportant
un boîtier (4) pour recevoir une réserve de lubrifiant,
un raccord de machine (5) avec canal de distribution de lubrifiant (6) sur un côté du boîtier (4), un piston de réglage (7) ajusté dans le boîtier (4), dont le mouvement peut être commandé pour déterminer le débit de lubrifiant,
un dispositif d'entraînement (8) à moteur électrique pour le déplacement du piston de réglage (7), un dispositif électrique de commande (9) relié au dispositif d'entraînement à moteur électrique pour la commande du débit de lubrifiant, et
des moyens (10) pour alimenter en énergie électrique le dispositif d'entraînement (8) à moteur électrique et le dispositif électrique de commande (9),
le dispositif d'entraînement (8) à moteur électrique étant réalisé en tant que motoréducteur avec un moteur électrique (11) et un démultiplicateur (12), l'arbre de sortie (13) du démultiplicateur étant relié au piston de réglage (7), par un mécanisme de poussée, et le dispositif de commande (8) comportant une horloge pour la commande du mécanisme d'entraînement (8) à moteur électrique à des intervalles de temps qui peuvent être déterminés en fonction du débit de lubrifiant à régler, **caractérisé en ce que** le dispositif de commande (9) est relié au dispositif d'entraînement (8) à moteur électrique, par un amplificateur de puissance (17) qui amplifie les signaux électriques du dispositif de commande (9) à un niveau de puissance qui convient à l'entraînement du dispositif d'entraînement (8) à moteur électrique, et **en ce qu'**il est prévu une commande électromécanique de course qui comporte un rotor (21) relié solidairement en rotation à un arbre du démultiplicateur, un stator (22) solidaire du boîtier et une paire de contacts (20) qui peut être actionnée dans des positions angulaires prédéterminées du rotor,
l'amplificateur de puissance (17) recevant, à intervalles de temps présélectionnés, une impulsion qui est amplifiée et qui provoque un démarrage du dispositif d'entraînement (8) à moteur électrique,
au démarrage du dispositif d'entraînement (8) à moteur électrique, un circuit électrique est fermé et le dispositif d'entraînement (8) à moteur électrique reçoit du courant indépendamment de la durée de l'impulsion qui s'applique à l'amplificateur de puissance (17), et
le dispositif d'entraînement (8) à moteur électrique fonctionne jusqu'à ce que le rotor (21) atteigne une position angulaire prédéterminée dans laquelle la paire de contacts (20) interrompt l'arrivée de courant au dispositif d'entraînement (8) à moteur électrique.

2. Distributeur de lubrifiant selon la revendication 1, **caractérisé en ce que** le stator comporte un frotteur (23) et le rotor une piste de contact (24) périphérique avec au moins une zone (25) non conductrice de la piste de contact.

3. Distributeur de lubrifiant selon la revendication 1, **caractérisé en ce que** le rotor (21) est réalisé en tant que disque à cames avec au moins une came de commutation, et **en ce que** le dispositif de commutation (20) comporte un palpeur avec un élément d'actionnement qui peut être actionné par la came de commutation.

4. Distributeur de lubrifiant selon l'une des revendications 1 à 3, **caractérisé en ce que** le mécanisme de poussée est réalisé en tant que mécanisme à vis avec broche rotative (14) et écrou de broche (15) fixé solidairement en rotation au piston de réglage (7) ou formé dans le piston de réglage (7).

5. Distributeur de lubrifiant selon l'une des revendications 1 à 4, **caractérisé en ce que** le dispositif de commande (9) comporte un microprocesseur, **en ce que** le microprocesseur est programmé au moins en partie en tant qu'horloge réglable, et **en ce que** l'intervalle de temps peut être réglé et modifié au moyen d'interrupteurs (16) qui peuvent être actionnés par un opérateur.

6. Distributeur de lubrifiant selon l'une des revendications 1 à 5, **caractérisé en ce que** le dispositif de commande électrique (9) comporte un dispositif avertisseur (18) au moyen duquel, en cas de consommation de courant inadmissible du dispositif d'entraînement (8) à moteur électrique, son alimentation en courant peut être coupée et un dispositif d'alarme (19) peut être activé.

7. Distributeur de lubrifiant selon l'une des revendications 1 à 6, **caractérisé en ce que** le dispositif d'entraînement (8) à moteur électrique, le dispositif de commande (9) et/ou les moyens (10) pour l'alimentation en énergie électrique sont reliés de manière séparable au boîtier (4) et au piston de réglage (7).

8. Distributeur de lubrifiant selon l'une des revendications 1 à 7, **caractérisé en ce que** le dispositif d'entraînement (8) à moteur électrique, le dispositif de commande (9) et les moyens (10) pour l'alimentation en énergie électrique sont intégrés dans le boîtier (4), sur le côté du piston de réglage (7), tourné à l'opposé du lubrifiant (2).

9. Distributeur de lubrifiant selon l'une des revendications 1 à 8, **caractérisé en ce que** le boîtier (4) avec le piston de réglage (7) ajusté à l'intérieur est disposé excentré dans une chambre de réception (26) cylindrique, le boîtier (4) étant en contact avec une zone de paroi (B) de la chambre de réception (26) cylindrique, **en ce que** dans l'espace de chambre de réception (27) en forme de croissant, qui reste libre dans le plan horizontal, à côté du boîtier (4), est disposé le dispositif d'entraînement (8) à moteur électrique qui comporte un pignon mené (28), **en ce que** dans la partie supérieure de la chambre de réception (26) est disposé un espace de transmission (29) qui comporte au moins une roue de transmission (30) sur laquelle agit le pignon mené (28), et **en ce que** la chambre de réception (26) est fermée par un agencement de couvercle (31) amovible.

10. Distributeur de lubrifiant selon la revendication 9, **caractérisé en ce que** dans l'espace de chambre de réception (27) en forme de croissant est disposé aussi le dispositif de commande électrique (9), de préférence à côté du dispositif d'entraînement (8) à moteur électrique.

11. Distributeur de lubrifiant selon la revendication 9, **caractérisé en ce que** dans l'espace de chambre de réception (27) en forme de croissant, de préférence à côté du dispositif d'entraînement (8) à moteur électrique, sont disposés aussi les moyens (10) d'alimentation en énergie électrique du dispositif d'entraînement (8) à moteur électrique.

12. Distributeur de lubrifiant selon l'une des revendications 9 à 11, **caractérisé en ce que** le dispositif d'entraînement (8) à moteur électrique est disposé dans la zone la plus large de l'espace de chambre de réception (27) en forme de croissant, et sont disposés d'une part le dispositif de commande électrique (9) pour le dispositif d'entraînement (8) à moteur électrique ainsi que, d'autre part, les moyens (10) pour l'alimentation en énergie du dispositif d'entraînement (8) à moteur électrique.

13. Distributeur de lubrifiant selon l'une des revendications 1 à 12, **caractérisé en ce que** dans la zone de paroi (8) de la chambre de réception (26) cylindrique, qui est en contact avec le boîtier, est découpée une fente de contrôle (32) qui permet de voir le boîtier (4).

14. Distributeur de lubrifiant selon l'une des revendications 9 à 13, **caractérisé en ce que** la chambre de réception (26) cylindrique et le couvercle (31) sont injectés en matière plastique.
